# EUROPÄISCHE PATENTSCHRIFT

(11) **EP 0 841 742 B1**
(45) Veröffentlichungstag und Bekanntmachung des Hinweises auf die Patenterteilung: **27.03.2002**
(21) Anmeldenummer: 97810770.4
(22) Anmeldetag: 13.10.1997
(51) Int. Cl.: H02M 7/48

(54) **Stromrichterschaltungsanordung**
Power converter circuit
Circuit de conversion de puissance

(30) Priorität: 08.11.1996 DE 19646085
(43) Veröffentlichungstag der Anmeldung: 13.05.1998
(73) Patentinhaber: ABB Industrie AG, 5400 Baden (CH)
(72) Erfinder: Dähler, Peter, 5236 Remigen (CH); Gaupp, Osvin, 5400 Baden (CH); Grüning, Horst, Dr., 5430 Wettingen (CH)
(74) Vertreter: ABB Patent Attorneys

(56) Entgegenhaltungen:
- EP-A- 0 390 184

## Beschreibung

### Technisches Gebiet

Die Erfindung bezieht sich auf das Gebiet der Leistungselektronik. Sie geht aus von einer Stromrichterschaltungsanordnung nach dem Oberbegriff des ersten Anspruchs.

### Stand der Technik

Eine solche Stromrichterschaltungsanordnung wird beispielsweise im Artikel "Leistungsstarke statische Frequenzumrichter für den Bahnverkehr durch die Alpen", ABB Technik 5/1996, Seiten 4-10, oder im Artikel "Umrichterwerk Jübek", Elektrische Bahnen 93 (1995) 3, oder im Artikel "Statischer Umrichter Muldenstein", Elektrische Bahnen 93 (1995) 1/2, beschrieben. Darüber hinaus ist eine solche Stromrichterschaltungsanordnung aus der europrüschen Patentenmeldung EP 390 184 bekannt geworden.

Grundsätzlich wird bei den Schaltungsanordnungen nach dem Stand der Technik entweder die sogenannte Zweipunktwechselrichter- oder Dreipunktwechselrichtertechnik verwendet. Es sind mehrere Stromrichtereinheiten vorgesehen, die ausgangsseitig einen Transformator aufweisen, der über eine gemeinsame oder getrennte, last- bzw. bahnseitige Sekundärwicklung einen Lastkreis speist. Bei getrennten Sekundärwicklungen sind diese in Serie geschaltet.

Eine feinstufige Ausgangsspannung erreicht man mit den Konzepten nach dem Stand der Technik durch eine Vielzahl von einzelnen Stufen, deren Ausgangsspannungen addiert werden. Die benötigten GTOs, deren Beschaltung und insbesondere der Aufwand für die Transformatoren lassen den Herstellungspreis der Schaltungsanordnung beträchtlich ansteigen.

### Darstellung der Erfindung

Aufgabe der vorliegenden Erfindung ist es, eine Stromrichterschaltungsanordnung anzugeben, mit der eine feingestufte Ausgangsspannung mit weniger Transformatoren erzielbar ist und damit kostengünstiger herstellbar ist.

Diese Aufgabe wird bei einer Stromrichterschaltungsanordnung der eingangs genannten Art durch die Merkmale des ersten Anspruchs gelöst.

Kern der Erfindung ist es also, dass die Sekundärwicklungen der Ausgangstransformatoren in Serie mit der Primärwicklung eines Lasttransformators und den lastseitigen Anschlüssen eines ersten Stromrichters geschaltet sind. Dies erlaubt, die Übersetzungsverhältnisse der Ausgangstransformatoren untereinander z.B. binär oder ternär abzustufen. Dadurch stehen Stromrichterstufen mit unterschiedlichen Ausgangsspannungen zur Verfügung, und eine feinstufige Annäherung an eine sinusförmige Ausgangsspannung kann erzielt werden.

Die Stromrichter können die Struktur eines Dreipunkt- oder eines Zweipunktwechselrichters aufweisen. Die einzelnen Stromrichter können auch aus zwei Teilstromrichtern aufgebaut sein. Die Primärwicklung der Ausgangstransformatoren ist in diesem Fall zwischen den beiden Teilstromrichtern angeordnet.

Weitere Ausführungsbeispiele ergeben sich aus den entsprechenden abhängigen Ansprüchen.

Der Vorteil des erfindungsgemässen Aufbaus besteht darin, dass im Gegensatz zum Stand der Technik weniger Stromrichterstufen notwendig sind, um eine feinstufige Ausgangsspannung zu erreichen: Dadurch kann der Herstellungspreis tief gehalten werden. Ferner kann die Schaltfrequenz des Hauptstromrichters tief (= Grundfrequenz) gehalten werden. Dies wirkt sich positiv auf den Wirkungsgrad aus. Ein wesentlicher Vorteil der neuen Schaltungsanordnung liegt auch darin, dass die Vorteile der Serienschaltung von GTOs (Redundanz, Verfügbarkeit) in einem grossen Spektrum von Anlagenleistungen wirtschaftlich genutzt werden können.

### Kurze Beschreibung der Zeichnungen

Nachfolgend wird die Erfindung anhand von Ausführungsbeispielen im Zusammenhang mit den Zeichnungen näher erläutert.

Es zeigen:
- **Fig. 1**: Ein erstes Ausführungsbeispiel der Erfindung;
- **Fig. 2**: Ein zweites Ausführungsbeispiel der Erfindung;
- **Fig. 3**: Ein drittes Ausführungsbeispiel der Erfindung;
- **Fig. 4**: Spannungsverläufe für eine Schaltungsanordnung mit den Übersetzungsverhältnissen der Ausgangstransformatoren 4:1 und 2:1;
- **Fig. 5**: Spannungsverläufe für eine Schaltungsanordnung mit den Übersetzungsverhältnissen der Ausgangstransformatoren 9:1 und 3:1.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

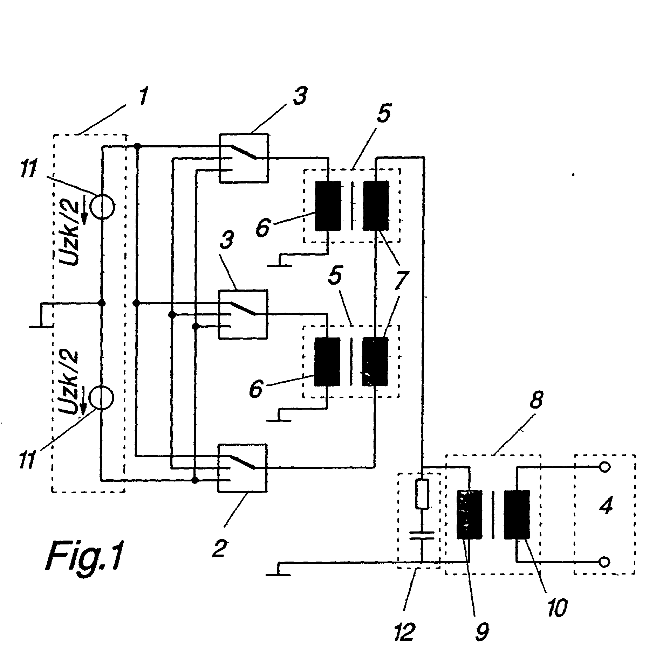

Figur 1 zeigt ein erstes Ausführungsbeispiel der Erfindung. Mit 1 ist ein Gleichspannungszwischenkreis bezeichnet. Dieser wird durch zwei Gleichspannungsquellen 11 mit je der halben Zwischenkreisspannung U_{zk}/2 dargestellt. An den Gleichspannungszwischenkreis 1 sind ein erster Stromrichter 2 und zwei weitere Stromrichter 3 in Parallelschaltung angeschlossen. Die beiden Stromrichter 3 weisen an ihrem lastseitigen Ausgang je einen Ausgangstransformator 5 auf. Der eine Anschluss der Primärwicklung 6 der Ausgangstransformatoren 5 ist mit dem Mittelpunkt des Zwischenkreises und der andere mit dem lastseitigen Ausgang der Stromrichter 3 verbunden. Ausserdem ist ein Lasttransformator 8 vorgesehen, der einen Lastkreis 4 speist. Der Lastkreis 4 kann beispielsweise ein Bahnnetz darstellen, während der Gleichspannungszwischenkreis 1 von einem Spannungsversorgungsnetz gespeist wird. Die Primärwicklung 9 des Lasttransformators 8 bildet mit den Sekundärwicklungen 7 der Ausgangstransformatoren 5 und dem lastseitigen Ausgang des ersten Stromrichters 2 einen Seriestromkreis. Somit werden über der Primärwicklung des Lasttransformators 8 alle Ausgangsspannungen der Stromrichter 2 und 3 summiert und über den Lasttransformator 8 auf den Lastkreis 4 mit einem bestimmten Übersetzungsverhältnis übertragen.

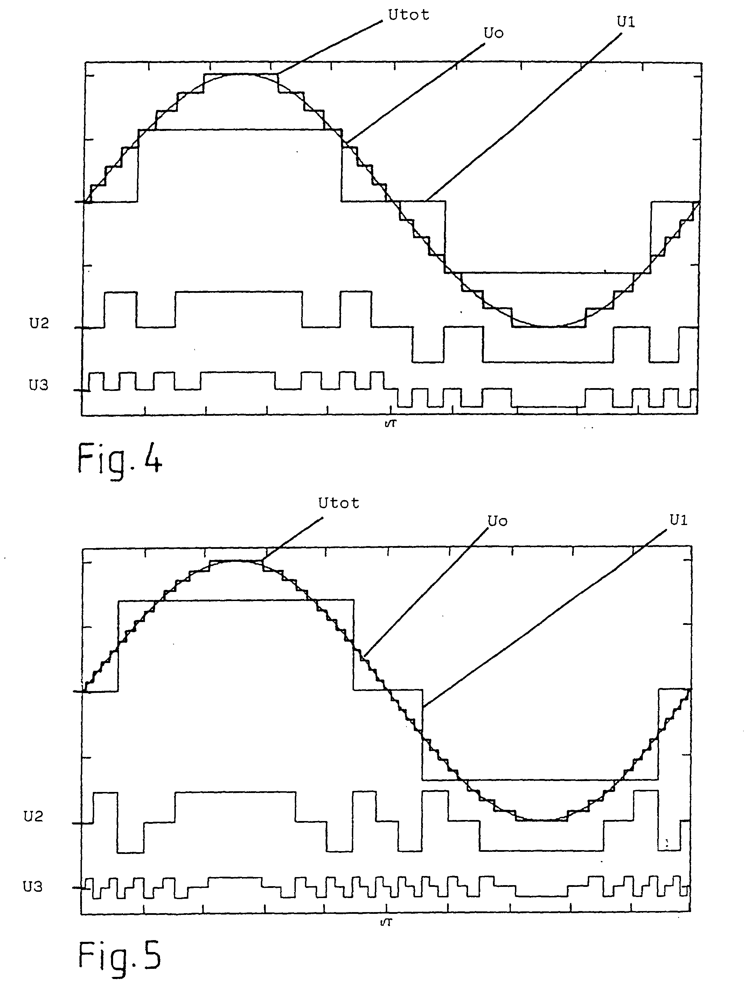

Wird nun das Übersetzungsverhältnis der Ausgangstransformatoren 5, d.h. das Verhältnis der Windungszahlen der Primärwicklung zur Sekundärwicklung, wobei die Primärwicklung den Ausgängen der Stromrichter 3 zugewandt sind, grösser als Eins gewählt, so bilden die weiteren Stromrichter 3 Feinstufen. Mit der erfindungsgemässen Schaltungsanordnung lässt sich die Sinusfunktion durch Zu- und Wegschalten der einzelnen Stromrichter annähern. Durch entsprechende Ansteuerung der Stromrichter kann der ideale sinusförmige Spannungsverlauf im Lastkreis besser angenähert werden. **Figur 4** zeigt die entsprechenden Spannungsverläufe mit Übersetzungsverhältnissen der Ausgangstransformatoren 5 von 4:1 und 2:1. Figur 5 zeigt entsprechende Verläufe für Übersetzungsverhältnisse 9:1 und 3:1. U1 bezeichnet die ideale Ausgangsspannung des ersten Stromrichters 2, U2 diejenige des Stromrichters 3, dessen Ausgangstransformator ein Übersetzungsverhältnis von 2:1 bzw. 3:1 aufweist, und U3 diejenige des Stromrichters 3, dessen Ausgangstransformator ein Übersetzungsverhältnis von 4:1 bzw. 9:1 aufweist. Utot stellt die Summe der Spannungen U1, U2 und U3 dar und Uo den anzunähernden sinusförmigen Spannungsverlauf. Die binäre oder ternäre Abstufung der Übersetzungsverhältnisse bietet sich deshalb an, weil die Berechnung des Ansteuermusters und sich daraus ergebenden Steuerbefehlsfolgen einfach aufgebaut sind. Andere, auch ungerade Übersetzungsverhältnisse wären aber auch denkbar und änderten an der grundlegenden Schaltungsanordnung nichts.

Aus den Figuren 4 und 5 ist ersichtlich, dass die weiteren Stromrichter 3 mit einer höheren Frequenz als der erste Stromrichter 2 getaktet werden müssen. Mit der erfindungsgemässen Schaltungsanordnung erreicht man ein recht gute Annäherung an die Sinusform. Durch die Abstufung der Übersetzungsverhältnisse der Ausgangstransformatoren sind auch nicht unwirtschaftlich viele Stufen notwendig, obwohl natürlich mit noch mehr Stufen eine noch feinere Annäherung der Sinusform erreicht werden könnte.

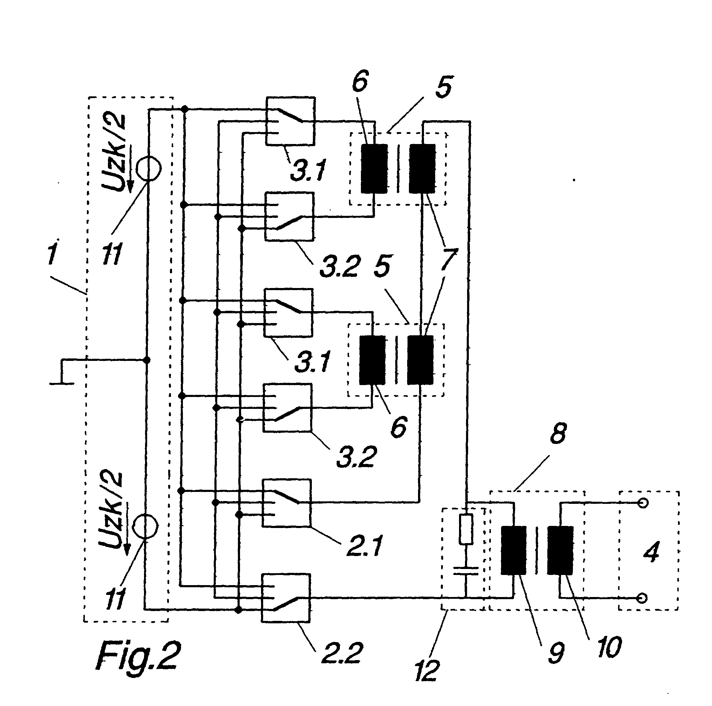

**Figur 2** zeigt ein weiteres Ausführungsbeispiel der Erfindung, bei dem die Stromrichter aus je zwei Teilstromrichtern 2.1, 2.2, 3.1, 3.2 aufgebaut sind. Bei dieser Anordnung sind die Primärwicklungen 6 der Ausgangstransformatoren 5 nicht mehr mit dem Ausgang des Stromrichter und Masse verbunden, sondern zwischen je zwei Teilstromrichter 3.1 und 3.2 geschaltet. Die Primärwicklung 9 des Lasttransformators 8 ist wiederum in Serie mit den Sekundärwicklungen 7, in diesem Fall aber auch mit den beiden Teilstromrichtern 2.1 und 2.2 des ersten Stromrichters geschaltet. Somit werden wiederum die Ausgangsspannungen aller Stromrichter bzw. Ausgangstransformatoren summiert und über den Last-transformator 8 auf den Lastkreis übertragen.

Der Vorteil der Anordnung nach Figur 2 besteht darin, dass die Ausgangsspannung durch phasenverschobene Ansteuerung der Teilstromrichter eines Stromrichterblocks in Amplitude und Phasenlage gegenüber dem zu speisenden Netz gesteuert werden kann. Bei Vollaussteuerung werden die benachbarten Teilstromrichter 2.1, 2.2 bzw. 3.1, 3.2 exakt invertiert angesteuert. Dadurch wird die Ausgangsspannung gegenüber der Anordnung nach Figur 1 verdoppelt. Die Steuerung (d.h. Absenkung oder Anhebung der Ausgangsspannung) erfolgt durch gegenseitige Schwenkung der Pulsmuster um den Steuerwinkel ±ε. Der Phasenwinkel der Ausgangsspannung gegenüber der Netzspannung wird durch gemeinsame Schwenkung aller 6 Pulsmuster um den Winkel δ erzeugt. Bezüglich der Ausgangsspannung ergibt sich die Beziehung, dass das Verhältnis von momentaner Ausgangsspannung zur maximalen Ausgangsspannung gleich cos(ε) ist

Parallel zur Primärwicklung des Lasttransformators 8 ist ausserdem ein Ausgangsfilter 12 in der Form eines RC-Gliedes vorgesehen. Es hat die Aufgaben, kleine unvermeidbare Schaltversätze derjenigen Stromrichter zu filtern, die theoretisch gleichzeitig schalten sollten.

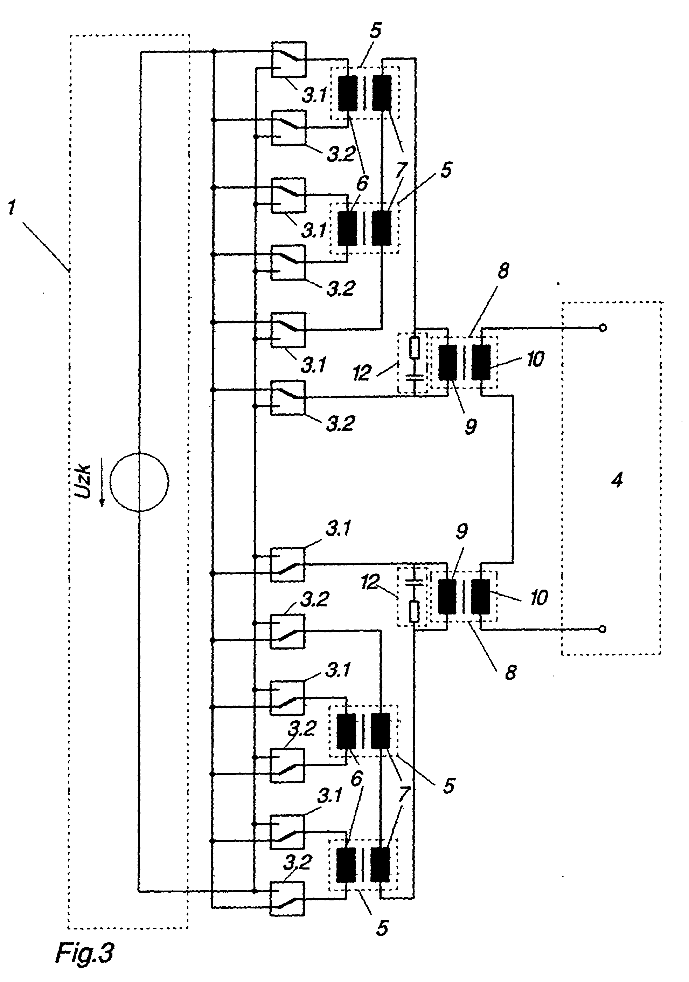

Die Beispiele nach den Figuren 1 und 2 verwenden Dreipunktwechselrichter als Stromrichterblöcke. Es ist selbstverständlich auch möglich, eine entsprechende Schaltungsanordnung mit Zweipunktwechselrichtern aufzubauen. **Figur 3** zeigt ein entsprechendes Ausführungsbeispiel. Die Schaltung ist spiegelsymmetrisch aufgebaut und umfasst eine obere Hälfte und eine untere Hälfte. Die Stromrichter der oberen Hälfte werden im Falle der Vollaussteuerung genau invers zu denjenigen der unteren Hälfte angesteuert. Eine Steuerung der Ausgangsspannung und des Phasenwinkels erhält man analog wie beim Beispiel nach **Figur 2** durch phasenverschobene Taktung der oberen Stromrichtergruppen bezüglich den unteren Stromrichtergruppen. Die Sekundärwicklung des Lasttransformators der oberen Hälfte ist mit derjenigen der unteren Hälfte in Serie geschaltet.

Insgesamt ergibt sich mit der Erfindung eine Schaltungsanordnung, mit der auf wirtschaftliche Art und Weise eine gute Annäherung an die Sinusfunktion erzielt werden kann.

### Bezugszeichenliste

- 1: Gleichspannungszwischenkreis
- 2: erster Stromrichter
- 2.1, 2.2: Teilstromrichter
- 3: Stromrichter
- 3.1, 3.2: Teilstromrichter
- 4: Lastkreis
- 5: Ausgangstransformator
- 6: Primärwicklung des Ausgangstransformators
- 7: Sekundärwicklung des Ausgangstransformators
- 8: Lasttransformator
- 9: Primärwicklung des Lasttransformators
- 10: Sekundärwicklung des Lasttransformators
- 11: Gleichsp annungsquelle
- 12: Ausgangsfilter
- Uzk: Zwischenkreisspannung
- U1: Teilspannung des ersten Stromrichters
- U2: Teilspannung des zweiten Stromrichters
- U3: Teilspannung des dritten Stromrichters
- Utot: Ausgangsspannung
- Uo: Sinusspannung

## Patentansprüche

1. Stromrichterschaltungsanordnung umfassend einen Gleichspannungszwischenkreis (1) und einen ersten Stromrichter (2) und mindestens einen weiteren Stromrichter (3), die an den Gleichspannungszwischenkreis (1) angeschlossen sind und einen Lastkreis (4), insbesondere ein einphasiges Bahnnetz, speisen, wobei der oder jeder weitere Stromrichter (3) lastseitig einen Ausgangstransformator (5) aufweist;
**dadurch gekennzeichnet, dass**
(a) ein Lasttransformator (8) vorgesehen ist, dessen Sekundärwicklung (10) den Lastkreis (4) speist; und
(b) die oder jede Sekundärwicklung (7) der Ausgangstransformatoren (5) mit der Primärwicklung (9) des Lasttransformators (8) und den lastseitigen Anschlüssen des ersten Stromrichters (2) in Serie geschaltet sind.

2. Stromrichterschaltungsanordnung nach Anspruch 1, **dadurch gekennzeichnet, dass** der oder jeder Ausgangstransformator (5) ein Übersetzungsverhältnis grösser 1 aufweist.

3. Stromrichterschaltungsanordnung nach Anspruch 2, **dadurch gekennzeichnet, dass** mindestens zwei weitere Stromrichter (3) vorgesehen sind und dass die Ausgangstransformatoren (5) untereinander ein abgestuftes, insbesondere ein binär oder ternär abgestuftes, Übersetzungsverhältnis aufweisen.

4. Stromrichterschaltungsanordnung nach Anspruch 3, **dadurch gekennzeichnet, dass** insgesamt drei Stromrichter, nämlich der erste Stromrichter (2) und zwei weitere Stromrichter (3), vorgesehen sind und dass das Übersetzungsverhältnis der Ausgangstransformatoren (5) der beiden weiteren Stromrichter 3:1 bzw. 9:1 beträgt.

5. Stromrichterschaltungsanordnung nach Anspruch 3, **dadurch gekennzeichnet, dass** insgesamt drei Stromrichter, nämlich der erste Stromrichter (2) und zwei weitere Stromrichter (3), vorgesehen sind und dass das Übersetzungsverhältnis der Ausgangstransformatoren (5) der beiden weiteren Stromrichter (3) 2:1 bzw. 4:1 beträgt.

6. Stromrichterschaltungsanordnung nach Anspruch 3, **dadurch gekennzeichnet, dass** der erste Stromrichter (2) und die weiteren Stromrichter (3) je einen ersten Teilstromrichter (2.1) und einen zweiten Teilstromrichter (2.2) umfassen, wobei die Primärwicklungen (6) der Ausgangstransformatoren(5) von den beiden Teilstromrichtern (3.1, 3.2) der weiteren Stromrichter (3) gespeist werden und die Sekundärwicklungen (7) der Ausgangstransformatoren (8) mit der Primärwicklung (9) des Lasttransformators (8) und den beiden Teilstromrichtern (2.1, 2.2) des ersten Stromrichter (2) einen in Serie geschalteten Stromkreis bildet.

7. Stromrichterschaltungsanordnung nach einem der vorstehenden Ansprüche, **dadurch gekennzeichnet, dass** die Stromrichter (2, 3) oder Teilstromrichter (2.1, 2.2, 3.1, 3.2) die Struktur eines Dreipunktwechselrichters aufweisen und dass der Gleichspannungszwischenkreis (1) einen Plusanschluss, einen Minusanschluss und einen Neutralanschluss aufweist.

## Claims

1. Power converter circuit arrangement comprising a DC voltage intermediate circuit (1) and a first power converter (2) and at least one further power converter (3), which are connected to the DC voltage intermediate circuit (1) and feed a load circuit (4), in particular a single-phase railway grid, the or each further power converter (3) having an output transformer (5) on the load side;
**characterized in that**
(a) a load transformer (8) is provided, the secondary winding (10) of which feeds the load circuit (4); and
(b) the or each secondary winding (7) of the output transformers (5) are connected in series with the primary winding (9) of the load transformer (8) and the load-side terminals of the first power converter (2).

2. Power converter circuit arrangement according to Claim 1, **characterized in that** the or each output transformer (5) has a turns ratio of greater than 1.

3. Power converter circuit arrangement according to Claim 2, **characterized in that** at least two further power converters (3) are provided, and **in that** the turns ratio between the output transformers (5) is a gradated turns ratio, in particular a turns ratio gradated in a binary or ternary manner.

4. Power converter circuit arrangement according to Claim 3, **characterized in that** a total of three power converters, namely the first power converter (2) and two further power converters (3) are provided, and **in that** the turns ratio of the output transformers (5) of the two further power converters is 3:1 and 9:1.

5. Power converter circuit arrangement according to Claim 3, **characterized, in that** a total of three power converters, namely the first power converter (2) and two further power converters (3) are provided, and **in that** the turns ratio of the output transformers (5) of the two further power converters (3) is 2:1 and 4:1.

6. Power converter circuit arrangement according to Claim 3, **characterized in that** the first power converter (2) and the further power converters (3) each comprise a first power converter element (2.1) and a second power converter element (2.2), the primary windings (6) of the output transformers (5) being fed by the two power converter elements (3.1, 3.2) of the further power converters (3) and the secondary windings (7) of the output transformers (5) forming a series-connected circuit with the primary winding (9) of the load transformer (8) and the two power converter elements (2.1, 2.2) of the first power converter (2).

7. Power converter circuit arrangement according to one of the preceding claims, **characterized in that** the power converters (2, 3) or power converter elements (2.1, 2.2, 3.1, 3.2) have the structure of a three-point invertor, and **in that** the DC voltage intermediate circuit (1) has a positive terminal, a negative terminal and a neutral terminal.

## Revendications

1. Arrangement de convertisseurs de puissance comprenant un circuit intermédiaire à tension continue (1) et un premier convertisseur de puissance (2) et au moins un convertisseur de puissance supplémentaire (3) qui sont raccordés au circuit intermédiaire à tension continue (1) et qui alimentent un circuit de charge (4), plus particulièrement un réseau ferroviaire monophasé, le ou les convertisseurs de puissance supplémentaires (3) présentant un transformateur de sortie (5) du côté de la charge
**caractérisé en ce que**
(a) il est prévu un transformateur de charge (8) dont l'enroulement secondaire (10) alimente le circuit de charge (4) ; et
(b) le ou chaque enroulement secondaire (7) des transformateurs de sortie (5) est branché en série avec l'enroulement primaire (9) du transformateur de charge (8) et des bornes côté charge du premier convertisseur de puissance (2).

2. Arrangement de convertisseurs de puissance selon la revendication 1, **caractérisé en ce que** le ou chaque transformateur de sortie (5) présente un rapport de transformation supérieur à 1.

3. Arrangement de convertisseurs de puissance selon la revendication 2, **caractérisé en ce qu'**au moins deux convertisseurs de puissance supplémentaires (3) sont prévus et que les transformateurs de sortie (5) présentent entre eux un rapport de transformation étagé, plus particulièrement étagé de manière binaire ou ternaire.

4. Arrangement de convertisseurs de puissance selon la revendication 3, **caractérisé en ce que** trois convertisseurs de puissance sont prévus en tout, à savoir le premier convertisseur de puissance (2) et deux convertisseurs de puissance supplémentaires (3) et que le rapport de transformation des transformateurs de sortie (5) des deux convertisseurs de puissance supplémentaires est de 3:1 ou de 9:1.

5. Arrangement de convertisseurs de puissance selon la revendication 3, **caractérisé en ce que** trois convertisseurs de puissance sont prévus en tout, à savoir le premier convertisseur de puissance (2) et deux convertisseurs de puissance supplémentaires (3) et que le rapport de transformation des transformateurs de sortie (5) des deux convertisseurs de puissance supplémentaires (3) est de 2:1 ou de 4:1.

6. Arrangement de convertisseurs de puissance selon la revendication 3, **caractérisé en ce que** le premier convertisseur de puissance (2) et les convertisseurs de puissance supplémentaires (3) comprennent chacun un premier convertisseur de puissance partiel (2.1) et un deuxième convertisseur de puissance partiel (2.2), les enroulements primaires (6) des transformateurs de sortie (5) étant alimentés par les deux convertisseurs de puissance partiels (3.1, 3.2) du convertisseur de puissance supplémentaire (3) et les enroulements secondaires (7) des transformateurs de sortie (8) formant un circuit électrique série avec l'enroulement primaire (9) du transformateur de charge (8) et les deux convertisseurs de puissance partiels (2.1, 2.2) du premier convertisseur de puissance (2).

7. Arrangement de convertisseurs de puissance selon l'une des revendications précédentes, **caractérisé en ce que** les convertisseurs de puissance (2, 3) ou les convertisseurs de puissance partiels (2.1, 2.2, 3.1, 3.2) présentent la structure d'un onduleur à trois points et que le circuit intermédiaire à tension continue (1) présente une borne positive, une borne négative et une borne de neutre.
